# EUROPÄISCHE PATENTANMELDUNG

(11) **EP 2 361 806 A2**
(43) Veröffentlichungstag der Anmeldung: **31.08.2011**
(21) Anmeldenummer: 11151352.9
(22) Anmeldetag: 19.01.2011
(51) Int. Cl.: B60R 1/00, B60R 11/04

(54) **Kameraüberwachungseinrichtung für ein Kraftfahrzeug**

(30) Priorität: 25.02.2010 DE 202010002827 U
(71) Anmelder: Zdrahal, Sascha, 71272 Renningen (DE)
(72) Erfinder: Zdrahal, Sascha, 71272 Renningen (DE)
(74) Vertreter: Maser, Jochen

(57) **Zusammenfassung**

Die Erfindung betrifft eine Kameraüberwachungseinrichtung für einen rückwärtigen Fahrraum eines Kraftfahrzeuges (11), mit einem Gehäuse (16), in welches zwei Kameras (21, 22) zur jeweiligen Bilderfassung des rückwärtigen Fahrraumes angeordnet sind, das an einer Innenseite einer Heckscheibe (17) des Fahrzeuges (11) positionierbar ist, wobei das Gehäuse (16) ein Gehäusefenster (18) aufweist, durch welches die Kameras (21, 22) jeweils ein Bild des rückwärtigen Fahrraumes erfassen, die zwei Kameras (21, 22) in dem Gehäuse (16) jeweils in einer festen Position zum Gehäuse (16) angeordnet sind, die Kameras (21, 22) voneinander abweichend ausgerichtet sind, so dass deren jeweiligen Erfassungsbereiche sich zumindest in vertikaler Richtung zumindest teilweise überlappen und zumindest im Fahrbetrieb die zum Horizont ausgerichtete Kamera (21) zur Überwachung des Fernbereiches und zumindest im Rückfahrbetrieb die zum Boden ausgerichtete Kamera (22) zur Überwachung des Nahbereiches eingeschalten ist. (Hierzu Figur 2)

## Beschreibung

Die Erfindung betrifft eine Kameraüberwachungseinrichtung für einen rückwärtigen Fahrraum eines Kraftfahrzeuges.

Aus der DE 298 06 638 U1 geht eine Kameraüberwachungseinrichtung hervor, welche im Heckbereich eines Kraftfahrzeuges angeordnet ist. Diese Kameraüberwachungseinrichtung umfasst eine Kamera zur Bilderfassung, so dass für den Fahrer ein rückwärtiger Fahrraum seines Kraftfahrzeuges sichtbar wird. Diese Kamera ist in einem Gehäuse mit einer Bremsleuchteinheit integriert. Beim Einlegen eines Rückwärtsganges wird diese Kamera eingeschaltet und gibt dem Fahrer über eine zum Fahrer sichtbar angeordnete Bildwiedergabe- und/oder Anzeigevorrichtung den erfassten rückwärtigen Fahrraum wieder. Eine solche Anordnung weist den Nachteil auf, dass der rückwärtige Fahrraum für den Fahrer nicht hinreichend sichtbar dargestellt wird, zumal aufgrund der Einbausituation der Rückfahrkamera eine Ausrichtung in horizontaler Richtung erfolgt, so dass nur der Fernbereich und nicht ein Nahbereich des rückwärtigen Fahrraumes zuverlässig erkannt werden kann. Auch ein Ersatz für den Rückspiegel ist hier nicht vorgesehen beziehungsweise möglich, da nur eine fest montierte Kamera Verwendung findet. Darüber hinaus ist eine Nachrüstung nur schwer möglich.

Aus der DE 20 2007 002 448 U1 ist eine Kameraüberwachungseinrichtung für einen rückwärtigen Fahrraum eines Kraftfahrzeuges bekannt geworden, bei welcher in einem Gehäuse zwei nebeneinander angeordnete Kameras von in horizontaler Richtung schwenkbaren Halterungen aufgenommen sind. Die beiden Kameras werden dabei derart angesteuert, dass durch beide Kameras gleichzeitig eine Bilderfassung erfolgt und die erfassten Bilder von jeder Kamera gleichzeitig an eine Bilderfassungseinrichtung weitergeleitet werden. In dieser Bilderfassungseinrichtung werden die erfassten Bilder verarbeitet und aufbereitet, so dass dem Fahrer ein vergrößerter Sichtwinkel durch die Aufbereitung der beiden Bilder zur Verfügung gestellt wird und tote Winkel über die Kameraüberwachungseinrichtung eingesehen werden können. Diese Bilderfassung erfordert eine aufwändige Bildverarbeitung. Darüber hinaus kann der Nahbereich im rückwärtigen Fahrraum nur schwer erkannt werden, und eine schwenkbare Halterung beinhaltet immer bewegliche Teile, die einem gewissen Verschleiß unterliegen.

Aus der DE 101 62 653 A1 ist des Weiteren eine Kameraüberwachungseinrichtung bekannt, bei der in einem Gehäuse zwei Kameras angeordnet sind, wobei die beiden Kameras als Stereokameraanordnung entfernt zueinander in dem Gehäuse vorgesehen sind. Dies bedeutet, dass jede Kamera ein Bild erfasst und diese beiden parallel erfassten Bilder in einer Bilderverarbeitungseinrichtung ausgearbeitet werden, um eine einzige rückwärtige Ansicht in einer Anzeigenvorrichtung auszugeben. Eine Differenzierung zwischen der Erfassung eines Nahbereiches und eines Fernbereiches kann durch diese Kamera nicht erfolgen. Somit bleibt ein rückwärtiges Einparken, insbesondere bei Fahrzeugen mit Kastenaufbau, Lieferwägen, Freizeitwägen und Campingbussen, erschwert.

Der Erfindung liegt deshalb die Aufgabe zugrunde, eine Kameraüberwachungseinrichtung vorzuschlagen, bei welcher sowohl während des Fahrbetriebes eine zufriedenstellende Überwachung des rückwärtigen Fahr-oder Verkehrsraumes und beim Rückwärtsfahren, Einparken oder einer gemeinsamen Einsichtnahme des Nahbereiches im rückwärtigen Fahrraum jeweils eine optimale Darstellung ermöglicht ist.

Diese Aufgabe wird erfindungsgemäß durch die Merkmale des Anspruchs 1 gelöst.

Durch die erfindungsgemäße Anordnung von zwei Kameras, die fest in einem Gehäuse angeordnet und einem Gehäusefenster zugeordnet sind, welches an einer Innenseite einer Heckscheibe positionierbar ist, wobei die zwei Kameras in dem Gehäuse jeweils in voneinander abweichenden Richtungen ausgerichtet sind und verschiedene Erfassungsbereiche aufweisen, wobei sich die voneinander abweichenden Erfassungsbereiche zumindest teilweise in vertikaler Richtung überlappen. Im Fahrbetrieb wird nur das Bild der einen Kamera, welche in horizontaler Richtung ausgerichtet ist, in der Anzeigeeinheit dargestellt. Diese Kamera dient zur Überwachung des Fernbereiches. Im Rückwärtsbetrieb des Fahrzeugs wird nur das Bild der zweiten, nach unten ausgerichteten Kamera in der Anzeigeneinheit dargestellt. Die zweite Kamera dient zur Überwachung des Nahbereiches. Dadurch wird der Vorteilerzielt, dass durch einen einfachen konstruktiven Aufbau anwendungsspezifisch sowohl der Fernbereich als auch der Nahbereich im rückwärtigen Fahrraum visualisierbar ist. Durch die zwei fest angeordneten Kameras kann auf bewegbare Teile, die dem Verschleiß unterliegen, verzichtet werden. Durch die Umschaltung von der einen Kamera zumindest im Fahrbetrieb zur anderen Kamera zumindest im Rückfahrbetrieb wird auf eine aufwändige Bildverarbeitung beziehungsweise Bildaufbereitung verzichtet, da die erfassten Bilder bevorzugt direkt in der Anzeigenvorrichtung ausgegeben werden. Vielmehr wird das erfasste Bild in einer Anzeigenvorrichtung dargestellt. Somit kann im Fahrbetrieb die Kameraüberwachungseinrichtung einen Rückspiegel ersetzen beziehungsweise bei versperrter Sicht dem Fahrer den rückwärtigen Fahrraum visualisieren, um beispielsweise einen sicheren Fahrspurwechsel zu ermöglichen, beim Rückwärtsfahren zu unterstützen und gegebenenfalls Hindernisse darzustellen. Darüber hinaus weist eine solche Kameraüberwachungseinrichtung den Vorteil auf, dass diese in einfacher Weise in einem Fahrzeug nachrüstbar ist. Durch die Anordnung einer solchen Kameraüberwachungseinrichtung an einer Innenseite einer Heckscheibe ist diese geschützt im Fahrzeuginnenraum angeordnet. Darüber hinaus bleiben die Fahrzeuggestalt sowie die Fahrzeugaußenabmessungen unverändert, so dass auch eine Waschstraßen- und Tiefgaragentauglichkeit gegeben ist.

Eine bevorzugte Ausgestaltung der Kameraüberwachungseinrichtung sieht vor, dass die zur Horizontalen ausgerichtete Kamera einen vertikalen Winkelbereich zur Bilderfassung aufweist, dessen oberer Erfassungsbereich oberhalb der Horizontalen liegt. Vorzugsweise wird ein rückwärtiger Abstand zum Fahrzeug von wenigstens 3 m und mehr erfasst. Diese zum Horizont ausgerichtete Kamera ist bevorzugt mit einem Objektiv versehen, das in etwa dem Blickwinkel des menschlichen Auges entspricht, und bildet einen Ersatz für einen Rückspiegel. Insbesondere bei Fahrzeugen mit einem Kastenaufbau, Lieferwagen, aber auch Freizeitwägen, Fahrzeugen und Campingbussen ist die Sicht durch den Innenraum nach hinten zumeist versperrt und kann durch eine solche, im Wesentlichen horizontal ausgerichtete Rückfahrkamera ersetzt werden.

Die zum Horizont ausgerichtete Kamera weist bevorzugt in horizontaler Richtung einen Winkelbereich zur Bilderfassung von maximal 100° auf. Bevorzugt sind maximal 90° oder maximal 60° vorgesehen, um den Fernbereich möglichst exakt und unverzerrt zu erfassen.

Die zweite Kamera, welche zum Boden geneigt und für den Nahbereich vorgesehen ist, weist bevorzugt einen vertikalen Winkelbereich auf, der in unmittelbarer Nähe des Fahrzeughecks beginnt, und in Abhängigkeit des jeweils verwendeten Objektives bis einige Meter, von beispielsweise bis zu 8 m, hinter das Fahrzeug reicht. Dadurch kann der Nahbereich optimal erfasst werden.

Zur Sichterweiterung im Nahbereich des rückwärtigen Fahrraums ist bevorzugt vorgesehen, dass die zum Boden geneigte Kamera in horizontaler Richtung einen Winkelbereich von mehr als 90°, vorzugsweise 120°, aufweist. Ein solcher Weitwinkel ermöglicht, dass auch tote Winkel mit einer Kamera eingesehen werden können und somit die Sicherheit bei einer Rückwärtsbewegung des Fahrzeuges erhöht ist.

Des Weiteren ist bevorzugt vorgesehen, dass jede Kamera die erfassten Bilder kabellos oder über eine Anschlussleitung an eine Anzeigeneinrichtung, insbesondere an eine im Fahrzeug eingebaute Anzeigeneinrichtung, übermittelt. Beispielsweise eignet sich eine draht- oder kabellose Übertragung bei einer Nachrüstung der Kameraüberwachungseinrichtung in ein Fahrzeug. Bei einer bauseitigen Integration kann bevorzugt eine Anschlussleitung vorgesehen sein, die zur Anzeigeneinrichtung, insbesondere zu einer im Instrumententafelbauteil integrierten Anzeigeneinrichtung, führt.

Des Weiteren ist bevorzugt vorgesehen, dass beide Kameras während dem Betrieb des Fahrzeuges eingeschalten sind und in Abhängigkeit des Betriebsmodus eine Umschaltung von der einen zur anderen Kamera zur Ausgabe der jeweiligen erfassten Bilder in der Anzeigeneinrichtung erfolgt. Dadurch wird ohne zeitliche Verzögerung eine sofortige Überwachung des Fernbereiches in den Nahbereich und umgekehrt ermöglicht. Ein aufwändiger Bildaufbau zu Beginn des Einschaltens einer Kamera kann dabei entfallen.

Des Weiteren ist bevorzugt vorgesehen, dass im Fahrbetrieb oder Standbetrieb die zur Horizontalen ausgerichtete Kamera die erfassten Bilder an die Anzeigeneinrichtung übermittelt und beim Einlegen des Rückwärtsganges oder bei einer manuellen Betätigung eines Schalters die zweite zum Boden geneigte Kamera zur Übermittlung aktiviert beziehungsweise freigeschalten ist. Somit kann beispielsweise ein Automatikbetrieb vorgesehen sein, bei dem im Fahrbetrieb die eine Kamera den Fernbereich und bei einer Rückwärtsbewegung des Fahrzeuges die andere Kamera den Nahbereich überwacht. Durch einen manuellen Betrieb kann beispielsweise beim stehenden Fahrzeug sowohl der Fernbereich als auch der Nahbereich des rückwärtigen Fahrraumes wahlweise eingesehen werden.

Eine weitere bevorzugte Ausgestaltung der Erfindung sieht vor, dass im Fahrbetrieb oder Standbetrieb des Kraftfahrzeuges die zum Horizont ausgerichtete Kamera zur Übertragung der erfassten Bilder eingeschalten ist und eine Steuerung ein Videosignal von der zum Horizont ausgerichteten Kamera auswertet und beim Zuschalten des Rückwärtsganges oder Betätigen eines Schalters die zum Boden geneigte Kamera zur Übertragung der erfassten Bilder eingeschalten wird und zeitverzögert die zum Horizont ausgerichtete Kamera abgeschaltet wird und gleichzeitig mit der Abschaltung der zum Horizont weisenden Kamera die Steuerung auf ein Videosignal der zum Boden weisenden Kamera umschaltet. Durch diese zeitverzögerte Umschaltung des Videosignals von der zum Horizont weisenden Kamera zur zum Boden weisenden Kamera wird ermöglicht, dass ein Übersprechen der einzelnen Signale verhindert ist. Somit kann eine klare Trennung der Videosignale der jeweiligen Kamera erfolgen, die im Bildschirm oder im Navigationssystem ausgegeben werden. Dadurch kann sichergestellt sein, dass während der Umschaltung für den Fahrer zunächst nur die Bilder von der zum Horizont ausgerichteten Kamera sichtbar sind und anschließend nur die erfassten Bilder von der zum Boden weisenden Kamera sichtbar sind, ohne dass dazwischen ein Fehlerbild oder schwarzer Bildschirm erscheint. Dies gilt vorzugsweise auch in Analogie für die Umschaltung zurück auf die zum Horizont weisende Kamera.

Eine weitere bevorzugte Ausgestaltung dieser alternativen Ausführungsform sieht vor, dass die zeitverzögerte Umschaltung von der zum Horizont ausgerichteten Kamera auf die zum Boden aufgerichtete Kamera eine Umschaltdauer von weniger als 1 Sekunde, vorzugsweise weniger als 0,5 Sekunden, aufweist. Vorzugsweise erfolgt analog zu dieser zeitverzögerten Umschaltung von der einen zur anderen Kamera auch eine zeitverzögerte Umschaltung des Videosignals. Durch die Verzögerung der Umschaltzeit kann erzielt werden, dass das Videosignal der zugeschalteten Kamera vollständig aufgebaut hat, bevor eine Umschaltung erfolgt. Dies gilt auch für die Umschaltung von der zum Boden weisenden Kamera auf die zum Horizont weisende Kamera.

Eine weitere bevorzugte Ausgestaltung der Erfindung sieht vor, dass das Gehäuse mit einem Befestigungsbereich, insbesondere einem Rand des Gehäusefensters, an der Innenseite der Heckscheibe verklebt ist. Diese Anordnung weist den Vorteil auf, dass eine einfache Nachrüstung ebenso wie ein Austausch ermöglicht ist. Darüber hinaus ist die Verklebung bevorzugt derart vorgesehen, dass eine Schwingungsentkopplung zwischen dem Gehäuse und der Innenscheibe erfolgt. Das Gehäusefenster kann dabei mit einem transparenten Wandabschnitt, beispielsweise durch eine Scheibe aus Glas oder Kunststoff, geschlossen sein. Alternativ kann das Gehäusefenster auch offen ausgebildet sein, wobei die Heckscheibe des Fahrzeugs das Gehäuse der Kameraeinheit abschließt.

Eine weitere bevorzugte Ausgestaltung der Erfindung sieht zumindest eine weitere Gehäuseöffnung vor, die mit einer diffusionsoffenen Membran geschlossen ist. Dadurch kann ein Druckausgleich zwischen dem Innenraum des Gehäuses und dem Innenraum des Fahrzeuges stattfinden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht von oben auf ein Fahrzeug mit einer Kameraüberwachungseinrichtung,
- Figur 2: eine schematische Seitenansicht des Fahrzeuges mit der Kameraüberwachungseinrichtung gemäß Figur 1 und
- Figur 3: eine perspektivische Darstellung der Kameraüberwachungseinrichtung gemäß Figur 1.

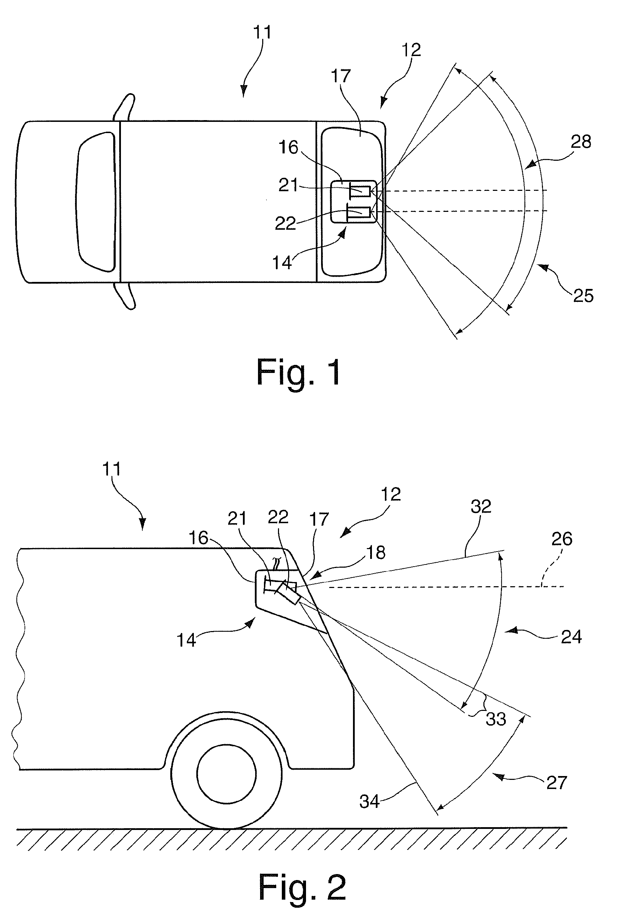

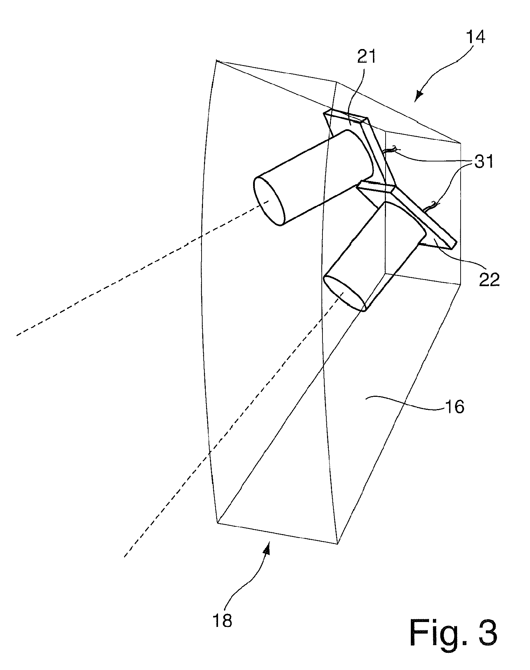

In Figur 1 ist eine schematische Ansicht von oben auf ein Fahrzeug 11 dargestellt, welches im Heckbereich 12 eine Kameraüberwachungseinrichtung 14 aufweist. In Figur 2 ist eine schematische Seitenansicht des Fahrzeuges 11 gemäß Figur 1 dargestellt. Die Kameraüberwachungseinrichtung 14 ist vergrößert in Figur 3 dargestellt und umfasst ein Gehäuse 16, welches ein zur Heckscheibe 17 weisendes Gehäusefenster 18 aufweist, durch welches eine erste Kamera 21 und eine zweite Kamera 22 von einem rückwärtigen Fahrraum des Fahrzeuges 11 jeweils Bilder erfasst. Die beiden Kameras 21, 22 sind im Gehäuse 16 feststehend angeordnet, wobei die Richtung zur Bilderfassung voneinander abweichen. Alternativ oder zusätzlich können auch die Bilderfassungswinkel beziehungsweise die Blickwinkel in der Richtung voneinander abweichen. Die Kamera 21 ist für die Bilderfassung eines Fernbereiches vorgesehen. Die Kamera 21 ist zur Erfassung eines vertikalen Winkelbereiches 24 ausgelegt, der sich zumindest geringfügig bis über die Horizontale 26 erstreckt, so dass ein oberer Erfassungsbereich 32 einige Winkelgrade über die Horizontale 26 reicht, und bevorzugt einen Bodenbereich ab einer Entfernung von circa 3 m oder 4 m, insbesondere ab 6 m, hinter dem Heckbereich 12 des Fahrzeuges 11 erfasst. Dieser vertikale Winkelbereich 24 ist in Figur 2 dargestellt. In horizontaler Richtung gesehen weist diese Kamera 21 einen horizontalen Winkelbereich 25 auf, der vorzugsweise kleiner als 100°, insbesondere kleiner als 90° und besonders bevorzugt kleiner als 60°, ist. Dieser vertikale und horizontale Winkelbereich 24, 25 werden durch die Kamera 21 erzielt. Bevorzugt kann vorgesehen sein, dass das die Brennweite des Objektivs auch noch verstellbar ausgebildet ist, um eine Einstellung eines nahen oder eines weiter entfernten Fernbereiches durch den Benutzer zu ermöglichen.

Die zweite Kamera 22 ist abweichend zur ersten Kamera 21 zum Boden geneigt, um den Nahbereich des rückwärtigen Fahrraumes zu erfassen. Dabei ist ein vertikaler Winkelbereich 27 vorgesehen, der unmittelbar an den Heckbereich 12 angrenzt und sich bis zum vertikalen Winkelbereich 24 der Kamera 21 derart erstreckt, dass diese sich überlappen und ein Überlappungsbereich 33 ausgebildet ist. Es kann aber auch vorgesehen sein, dass der vertikale Winkelbereich 27 der zweiten Kamera 22 festgelegt und der vertikale Winkelbereich 24 der ersten Kamera 21 derart eingestellt und ausgerichtet wird, dass dieser im vertikalen Winkelbereich 27 der zweiten Kamera 22 überlappt. Die Kamera 22 weist einen horizontalen Winkelbereich 28 von wenigstens 100°, vorzugsweise wenigstens 120° oder mehr, auf. Dies wird bevorzugt durch ein Weitwinkelobjektiv erzielt. Dieser horizontale Winkelbereich 28 ermöglicht, dass tote Winkel sichtbar werden. Bevorzugt wird die Kamera 22 so eingestellt, dass deren unterer Erfassungsbereich 34 unmittelbar hinter dem Fahrzeug beginnt. In Abhängigkeit des jeweiligen Heckbereiches 12 des Fahrzeuges 11 werden die Kameras 21, 22 in deren Winkelpositionen fest im Gehäuse 16 positioniert, so dass eine optimale Ausrichtung der vertikalen Winkelbereiche 24, 27 der Kameras 21, 22 gegeben ist, um vollständig den Nah- und Fernbereich einsehen zu können.

Die Kameras 21, 22 können beispielsweise als Videokameras oder CCD-Kameras ausgebildet sein, welche jeweils Videosignale an eine Steuerung ausgeben, die an eine Anzeigenvorrichtung wie beispielsweise ein Display oder an ein Navigationssystem oder dgl. anschließbar ist.

Das Gehäuse 16 ist bevorzugt über eine Klebeverbindung mit der Innenseite der Heckscheibe 17 verbunden. Dadurch kann insbesondere eine einfache Nachrüstung geschaffen werden. Das Gehäuse 16 kann als Metall- oder Kunststoffgehäuse ausgebildet sein. Insbesondere ist zumindest eine weitere Gehäuseöffnung im Gehäuse 16 vorgesehen, die durch eine diffusionsoffene Membran verschlossen ist, um einen Druckausgleich zwischen dem Inneren des Gehäuses 16 und der Umgebung beziehungsweise dem Innenraum eines Fahrzeuges 11 zu schaffen.

Diese Kameraüberwachungseinrichtung 14 ist bevorzugt für Fahrzeuge 11 mit einem Kastenaufbau, Lieferwagen, Freizeitfahrzeug, wie Wohnmobile und Campingbusse, Geländefahrzeuge oder dergleichen, vorgesehen. Die Kameraüberwachungseinrichtung 14 wird über Anschlussleitungen 31 an einer nicht näher dargestellten Anzeigeneinrichtung angeschlossen. Hierbei kann es sich um einen festeingebauten Bildschirm an einem Instrumententafelbauteil oder einer separaten Anzeigenvorrichtung handeln, die ebenfalls eine Komponente eines Nachrüstsatzes sein kann.

Zu Beginn einer Fahrt oder auf manuelle Anforderung über einen Schalter wird die Kameraüberwachungseinrichtung 14 eingeschalten. Bevorzugt wird eine der beide Kameras 21, 22 in Betrieb genommen, wobei während einer üblichen Fahrt die Kamera 21 zur Überwachung des rückwärtigen Fernbereiches aktiviert ist und in der Anzeigenvorrichtung erfasste Bilder an eine Steuerung ausgegeben werden. Die Kamera 22 ist bezüglich der Übermittlung der erfassten Bilder durch die Steuerung gegenüber der Anzeigenvorrichtung deaktiviert bzw. ausgeschalten. Beim Einlegen eines Rückwärtsganges oder auf manuelle Anforderung kann eine Umschaltung der Kamera 21 auf die Kamera 22 erfolgen, wobei zunächst die Kamera 22 eingeschalten wird. Zeitverzögert wird eine Umschaltung des Videosignals angesteuert, so dass der Bildaufbau der zugeschalteten Kamera abgeschlossen ist. Gleichzeitig mit dem Umschalten des Videosignals auf die zugeschaltete Kamera wird die bisherige Kamera abgeschaltet.

Die Kamera 21 dient als Ersatz für einen Rückspiegel während dem Fahrmodus. Die Kamera 22 dient als Rückfahrkamera, um beim Rückwärtsfahren oder Einparken oder Rückwärtsrangieren eine bessere Übersicht zu erhalten. Beide Kameras 21, 22 können wahlweise zur Überwachung des rückwärtigen Fahrraumes, insbesondere beim Stillstand des Kraftfahrzeuges 11, zur Ausgabe der erfassten Bilder ausgewählt werden. Somit weist die erfindungsgemäße Kameraüberwachungseinrichtung 14 einen konstruktiv einfachen Aufbau auf, der ohne den Einsatz von bewegten Elementen eine optimale Überwachung des rückwärtigen Fahrraumes ermöglicht.

## Patentansprüche

1. Kameraüberwachungseinrichtung für einen rückwärtigen Fahrraum eines Kraftfahrzeuges (11), mit einem Gehäuse (16), in welches zwei Kameras (21, 22) zur jeweiligen Bilderfassung des rückwärtigen Fahrraumes angeordnet sind, das an einer Innenseite einer Heckscheibe (17) des Fahrzeuges (11) positionierbar ist, **dadurch gekennzeichnet,**
- **dass** das Gehäuse (16) ein Gehäusefenster (18) aufweist, durch welches die Kameras (21, 22) jeweils ein Bild des rückwärtigen Fahrraumes erfassen,
- **dass** die zwei Kameras (21, 22) in dem Gehäuse (16) jeweils in einer festen Position zum Gehäuse (16) angeordnet sind,
- **dass** die Kameras (21, 22) voneinander abweichend ausgerichtet sind, so dass deren jeweiligen Erfassungsbereiche sich zumindest in vertikaler Richtung zumindest teilweise überlappen und
- **dass** zumindest im Fahrbetrieb die zum Horizont ausgerichtete Kamera (21) zur Überwachung des Fernbereiches und zumindest im Rückfahrbetrieb die zum Boden ausgerichtete Kamera (22) zur Überwachung des Nahbereiches eingeschalten ist.

2. Kameraüberwachungseinrichtung nach Anspruch 1, **dadurch gekennzeichnet, dass** die zum Horizont ausgerichtete Kamera (22) einen vertikalen Winkelbereich (24) zur Bilderfassung aufweist, dessen oberer Erfassungsbereich (32) einige Winkelgrade über die Horizontale (26) reicht.

3. Kameraüberwachungseinrichtung nach Anspruch 1, **dadurch gekennzeichnet, dass** die zum Horizont ausgerichtete Kamera (21) einen horizontalen Winkelbereich (25) zur Bilderfassung von maximal 100°, vorzugsweise maximal 90° umfasst.

4. Kameraüberwachungseinrichtung nach Anspruch 1, **dadurch gekennzeichnet, dass** die zum Boden geneigte Kamera (22) einen vertikalen Winkelbereich (27) zur Bilderfassung aufweist, dessen unterer Erfassungsbereich (34) unmittelbar hinter dem Fahrzeugheck beginnt.

5. Kameraüberwachungseinrichtung nach Anspruch 1, **dadurch gekennzeichnet, dass** die zum Boden geneigte Kamera (22) einen horizontalen Winkelbereich (28) zur Bilderfassung von mehr als 90°, vorzugsweise wenigstens 120°, aufweist.

6. Kameraüberwachungseinrichtung nach Anspruch 1, **dadurch gekennzeichnet, dass** jede Kamera (21, 22) die erfassten Bilder kabellos oder über Anschlussleitungen (31) an eine Anzeigeneinrichtung, insbesondere an eine im Fahrzeug eingebaute Anzeigeneinrichtung, übermittelt.

7. Kameraüberwachungseinrichtung nach Anspruch 1, **dadurch gekennzeichnet, dass** beide Kameras (21, 22) während dem Betrieb des Fahrzeuges eingeschalten sind und in Abhängigkeit des Betriebsmodus die Umschaltung von der einen auf die andere Kamera (21, 22) und zur Übermittlung des erfassten Bildes in die Anzeigeneinrichtung vorgesehen ist.

8. Kameraüberwachungseinrichtung nach Anspruch 1, **dadurch gekennzeichnet, dass** im Fahrbetrieb oder Standbetrieb des Kraftfahrzeuges (11) die zum Horizont ausgerichtete Kamera (21) zur Übertragung der erfassten Bilder und beim Einlegen eines Rückwärtsganges oder beim Betätigen eines Schalters die zum Boden geneigte Kamera (22) zur Übertragung der erfassten Bilder aktiviert ist.

9. Kameraüberwachungseinrichtung nach Anspruch 1, **dadurch gekennzeichnet, dass** im Fahrbetrieb oder Standbetrieb des Kraftfahrzeuges (11) die zum Horizont ausgerichtete Kamera (21) zur Übertragung der erfassten Bilder eingeschalten und eine Steuerung ein Videosignal der zum Horizont ausgerichteten Kamera (21) auswertet und beim Zuschalten des Rückwärtsganges oder Betätigung eines Schalters die zum Boden geneigte Kamera (22) zur Übertragung der erfassten Bilder eingeschalten wird und zeitverzögert die zum Horizont ausgerichtete Kamera (21) abgeschaltet und gleichzeitig mit der Abschaltung der zum Horizont weisenden Kamera (21) die Steuerung auf ein Videosignal der zum Boden weisenden Kamera (22) umschaltet.

10. Kameraüberwachungseinrichtung nach Anspruch 1, **dadurch gekennzeichnet, dass** nach dem Zuschalten des Rückwärtsganges oder nach dem Betätigen eines Schalters die zum Boden geneigte Kamera (22) zur Übertragung der erfassten Bilder eingeschalten und eine Steuerung ein Videosignal der zum Boden geneigten Kamera (22) auswertet und beim Umschalten auf den Fahrbetrieb oder auf einen Standbetrieb des Kraftfahrzeuges (11) die zum Horizont ausgerichtete Kamera (21) zur Übertragung der erfassten Bilder eingeschalten wird und zeitverzögert die zum Boden ausgerichtete Kamera (22) abgeschaltet und gleichzeitig mit der Abschaltung der zum Boden weisenden Kamera (22) die Steuerung auf ein Videosignal der zum Horizont weisenden Kamera (21) umschaltet.

11. Kameraüberwachungseinrichtung nach Anspruch 9 oder 10, **dadurch gekennzeichnet, dass** zeitverzögerte Umschaltung von der zum Horizont weisenden Kamera (21) auf die zum Boden weisende Kamera (22) eine Umschaltdauer von weniger als 1 Sekunde, vorzugsweise weniger 0,5 Sekunden, aufweist.

12. Kameraüberwachungseinrichtung nach einem der vorhergehenden Ansprüche, **dadurch gekennzeichnet, dass** das Gehäuse (16) mit einem Befestigungsbereich, insbesondere einem Gehäuserand des Gehäusefensters (18), an einer Innenseite der Heckscheibe (12) befestigt oder verklebt ist.

13. Kameraüberwachungseinrichtung nach Anspruch 1, **dadurch gekennzeichnet, dass** zumindest eine weitere Gehäuseöffnung im Gehäuse (16) vorgesehen ist, die durch eine diffusionsoffene Membran geschlossen ist.
